# EUROPEAN PATENT SPECIFICATION

(11) **EP 3 971 068 B1**
(45) Date of publication and mention of the grant of the patent: **12.03.2025**
(21) Application number: 21192375.0
(22) Date of filing: 20.08.2021
(51) Int. Cl.: B62J 1/06

(54) **STRADDLED VEHICLE**
GRÄTSCHSITZFAHRZEUG
VÉHICULE À ENFOURCHER

(30) Priority: 18.09.2020 JP 2020156923
(43) Date of publication of application: 23.03.2022
(73) Proprietor: YAMAHA HATSUDOKI KABUSHIKI KAISHA, Iwata-shi, Shizuoka 438-8501 (JP)
(72) Inventor: Oba, Mineo, Iwata-shi, Shizuoka-ken, 438-8501 (JP)
(74) Representative: Grünecker Patent- und Rechtsanwälte PartG mbB

(56) References cited:
- EP-A2- 0 751 062
- EP-A2- 1 754 657
- US-A1- 2016 214 677

## Description

The present invention relates to a straddled vehicle. The prior art document EP 1 754 657 A2 discloses a straddled vehicle comprising a body frame including a head pipe; a seat configured for a rider to sit on, the seat being disposed rearward of the head pipe with regard to a front-rear direction of the vehicle; a fuel tank provided between the head pipe and the seat; a seat height adjustment mechanism capable of adjusting height of the seat in at least two steps with regard to an up-down direction of the vehicle, a tank cover member that includes a portion covering a rear end portion of the fuel tank, wherein when the seat is at a first height, substantially no interspace exists between the seat and tank cover member. According to the seat height adjustment mechanism, the seat that shifts along a rear surface of the fuel tank which is inclined downward to the read of the vehicle. As a result, a clearance between the main seat and fuel tank can be kept substantially at the same length even when the height of the main seat is changed.

Some straddled vehicles are equipped with a mechanism for allowing the height of a seat to be changed. For example, Japanese Laid-Open Patent Publication No. 2007-50822 (hereinafter "Patent Document 1) discloses a motorcycle that includes a seat height changing device. The seat height changing device disclosed in Patent Document 1 allows the seat height to be adjusted in two steps.

In recent years, for reasons of attaining further improvements in one's ease of touching the ground with the feet, etc., an increased height adjustment range has been desired. However, when the seat height is set low, providing a large adjustment range for seat height may allow a large interspace to emerge between the seat and any component element (e.g., a fuel tank) that is located frontward of the seat. A large interspace existing frontward of the seat may result in poor aesthetics, and possibly an intrusion of water or foreign objects.

The present invention has been made in view of the above problem, and an objective thereof is to provide a straddled vehicle having a seat height adjustment mechanism suitably restrain an interspace from emerging frontward of the seat. According to the present invention said object is solved by a straddled vehicle having the features of independent claim 1. Preferred embodiments are laid down in the dependent claims.

The present specification discloses straddled vehicles as recited in the following Items.

### [Item 1]

A straddled vehicle comprising:
a body frame including a head pipe;
a seat on which a rider sits, the seat being disposed rearward of the head pipe;
an ahead-of-seat element located rearward of the head pipe and frontward of the seat; and
a seat height adjustment mechanism capable of adjusting height of the seat in at least two steps, wherein,
when the seat is at a first height, substantially no interspace exists between the seat and the ahead-of-seat element; and
the straddled vehicle further comprises a spacer member to be disposed between the ahead-of-seat element and the seat being at a second height which is lower than the first height, the spacer member filling an interspace between the ahead-of-seat element and the seat being at the second height.

A straddled vehicle according to an embodiment of the present teaching includes the spacer member that is disposed between the seat at a relatively low height (second height) and a ahead-of-seat element. Therefore, the spacer member fills the interspace between the seat and the ahead-of-seat element, thus promoting aesthetics and restraining intrusion of water and foreign objects.

### [Item 2]

The straddled vehicle of Item 1, wherein,
the seat includes a bottom plate located at a bottom face of the seat;
the bottom plate includes a protrusion that extends frontward;
the seat height adjustment mechanism includes a bracket having a plurality of insertion holes into which the protrusion of the bottom plate is insertable;
the plurality of insertion holes include a first insertion hole and a second insertion hole that is formed at a lower position than is the first insertion hole; and
the spacer member includes: a body section which fills the interspace between the ahead-of-seat element and the seat being at the second height; and an insertion-hole closing section extending downward from the body section to close the first insertion hole.

When the spacer member includes the insertion-hole closing section to close an insertion hole (first insertion hole) that is at a relatively high position of the bracket, an incorrect placement of the seat can be restrained.

### [Item 3]

The straddled vehicle of Item 1 or 2, wherein the spacer member is made of rubber.

As the material of the spacer member, rubber can be suitably used.

### [Item 4]

The straddled vehicle of any of Items 1 to 3, wherein,
the ahead-of-seat element has at least one aperture made in a position opposing the spacer member; and
the spacer member includes at least one tab to lock to the at least one aperture.

When the spacer member includes the tab(s) to lock to the aperture(s) of the ahead-of-seat element, the spacer member can be attached to the ahead-of-seat element in a suitable manner.

### [Item 5]

The straddled vehicle of any of Items 1 to 4, wherein the spacer member includes an alignment section that causes the spacer member to be aligned with the ahead-of-seat element.

When the spacer member includes the alignment section, alignment of the spacer member with respect to the ahead-of-seat element is facilitated.

### [Item 6]

The straddled vehicle of any of Items 1 to 5, wherein an upper face of the spacer member is located at a position lower than an imaginary plane connecting between an upper face of the ahead-of-seat element and an upper face of the seat.

The upper face of the spacer member is preferably located at a position lower than an imaginary plane connecting between the upper face of the ahead-of-seat element and the upper face of the seat. With such a design, even if the spacer member becomes somewhat larger due to manufacturing variations, the upper face of the spacer member is restrained from becoming higher than the aforementioned imaginary plane, whereby a decrease in aesthetics is restrained.

### [Item 7]

The straddled vehicle of any of Items 1 to 6, wherein the spacer member includes a portion that increases in thickness in an upward direction from a lower end of the spacer member.

When the spacer member includes a portion that increases in thickness in the upward direction from a lower end thereof, it is easier to adapt the shape of the spacer member to the interspace between the seat being at the second height and the ahead-of-seat element, whereby the spacer member can be reduced in weight.

### [Item 8]

The straddled vehicle of any of Items 1 to 7, wherein the seat overlaps a portion of the spacer member in a side view of the vehicle.

When the seat overlaps a portion of the spacer member in a side view of the vehicle, an interspace can be prevented from emerging between the seat and the spacer member in a side view of the vehicle, whereby aesthetics can be further promoted.

The straddled vehicle according to the present teaching comprises a fuel tank provided between the head pipe and the seat; and
the ahead-of-seat element is a tank cover member that includes a portion covering a rear end portion of the fuel tank.

The head-of-seat element may be a tank cover member that includes a portion covering a rear end portion of the fuel tank, for example. By providing the tank cover member, the shape of the fuel tank can be simplified.

Alternatively, in the straddled vehicle according to the present teaching the ahead-of-seat element is a fuel tank provided between the head pipe and the seat.

The ahead-of-seat element may be a fuel tank.

According to an embodiment of the present teaching, in a straddled vehicle having a seat height adjustment mechanism, it is possible to suitably restrain an interspace from emerging frontward of the seat.

### BRIEF DESCRIPTION OF THE DRAWINGS

FIG. 1 is a left side view schematically showing a motorcycle 1 according to an embodiment of the present teaching.
FIG. 2A is a side view showing the neighborhood of a seat 20 being in a high-position state.
FIG. 2B is a side view showing the neighborhood of the seat 20 being in a low-position state.
FIG. 3 is a cross-sectional view showing the seat 20.
FIG. 4 is a perspective view showing a state where the seat 20, a spacer member 30, and a tank cover member 4 are removed.
FIG. 5 is a top view showing a state where the seat 20, a tandem seat 26, and the spacer member 30 are removed.
FIG. 6 is a top view showing a state where the seat 20 and the tandem seat 26 are removed.
FIG. 7 is a perspective view showing the neighborhood of a seat lock bracket 78, with the seat 20 and the tandem seat 26 removed.
FIG. 8A is a plan view showing the spacer member 30 from the rear direction.
FIG. 8B is a side view showing the spacer member 30 from the left direction.
FIG. 8C is a plan view showing the spacer member 30 from the front direction.
FIG. 9 is a perspective view showing the neighborhood of the tank cover member 4 before the spacer member 30 is attached.
FIG. 10 is a perspective view showing the neighborhood of the tank cover member 4 after the spacer member 30 has been attached.
FIG. 11 is a cross-sectional view showing the spacer member 30 having been disposed between the tank cover member 4 and the seat 20.

### DETAILED DESCRIPTION

Hereinafter, embodiments of the present teaching will be described with reference to the drawings.

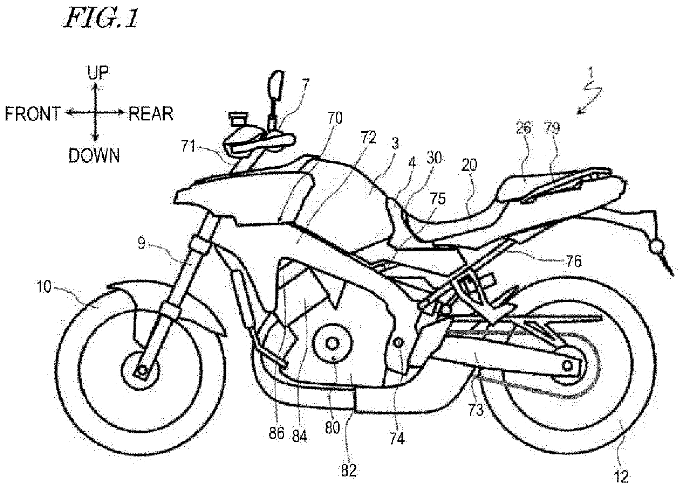

With reference to FIG. 1, a motorcycle 1 according to an embodiment of the present teaching will be described. FIG. 1 is a left side view schematically showing the motorcycle 1. The motorcycle 1 shown in FIG. 1 is an on-road type motorcycle. Note that motorcycles according to embodiments of the present teaching are not limited to on-road type motorcycles. Motorcycles according to embodiments of the present teaching may be motorcycles of any other type, such as a moped type, an off-road type, or a scooter type.

In the following description, "front", "rear", "right", and "left" respectively mean the front, rear, right, and left as viewed from a rider on the motorcycle 1. Herein, "up/above" and "down/below" respectively refer to the up/above direction and the down/below direction when the motorcycle 1 is stopped on the horizontal plane.

As shown in FIG. 1, the motorcycle 1 includes a fuel tank 3, a main seat (which may simply be referred to as "the seat" hereinbelow) on which a rider sits, a tandem seat 26 disposed rearward of the main seat 20, an engine 80 (which is an internal combustion engine), and a body frame 70 supporting these elements.

The body frame 70 includes a head pipe 71, a main frame 72, and a pair of rear arms 73. A steering shaft (not shown) is supported by the head pipe 71, with a handle bar 7 being provided at an upper portion of the steering shaft. Front forks 9 are provided at a lower portion of the steering shaft. A front wheel 10 is supported at lower end portions of the front forks 9 so as to be capable of rotating.

The main frame 72 extends in an obliquely lower rear direction from the head pipe 71. The main frame 72 is linked to both of the pair of rear arms 73 via a pivot axis 74. A rear wheel 12 is supported at rear end portions of the pair of rear arms 73 so as to be capable of rotating.

The body frame 70 further includes: a seat frame 75 extending in an obliquely upper rear direction from an intermediate portion of the main frame 72; and a pair of backstays 76 extending in an obliquely upper rear direction from the main frame 72, rearward of the seat frame 75.

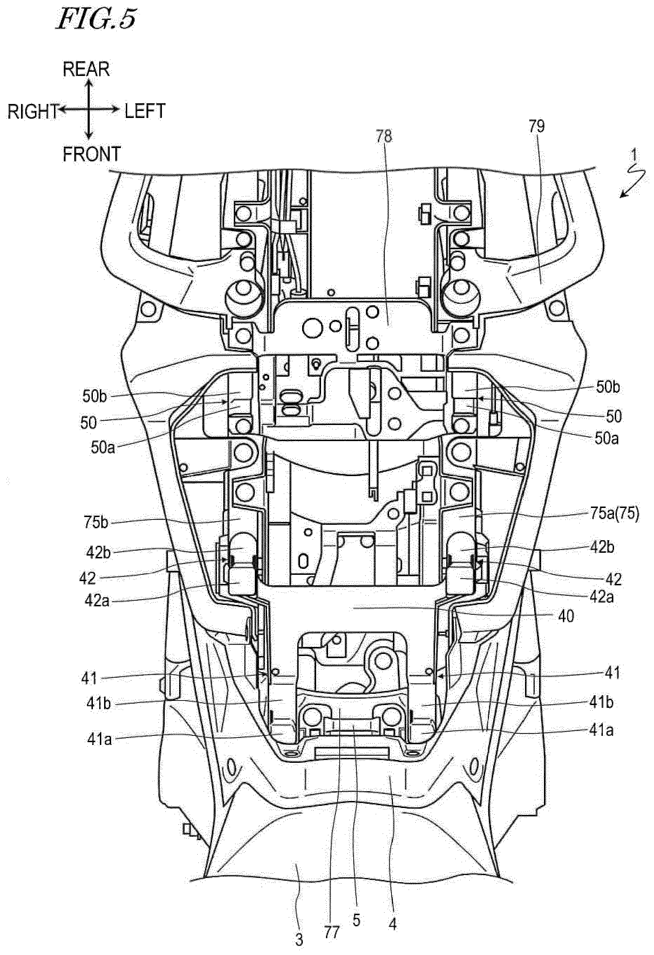

The seat frame 75 is located below the main seat 20 and the tandem seat 26, so as to support the main seat 20 and the tandem seat 26. The seat frame 75 includes a left seat frame member 75a located on the left side of the vehicle and a right seat frame member 75b located on the right side of the vehicle (see FIG. 5). The seat frame 75 and the pair of backstays 76 are connected to each other, rearward of the main frame 72. A grab bar 79 is attached to the seat frame 75.

The engine 80 is located below the main frame 72. The engine 80 is supported by the main frame 72 in a manner not capable of swinging. The engine 80 includes a crankcase 82, a cylinder block 84 extending in an obliquely upper front direction from the crankcase 82, a cylinder head 86 connected to an upper portion of the cylinder block 84, and a cylinder head cover (not shown) connected to an upper portion of the cylinder head 86.

The seat 20 is disposed rearward of the head pipe 71. The fuel tank 3 is located rearward of the head pipe 71 and frontward of the seat 20. In other words, the fuel tank 3 is disposed between the head pipe 71 and the seat 20. In the present embodiment, a tank cover member 4 is provided between the fuel tank 3 and the seat 20. The tank cover member 4 includes a portion covering a rear end portion of the fuel tank 3. The tank cover member 4 is located rearward of the head pipe 71 and frontward of the seat 20. In the present specification, any component element that is located immediately in front of the seat 20 may be referred to as an "ahead-of-seat element". In the present embodiment, the tank cover member 4 is an "ahead-of-seat element". In the case where the tank cover member 4 is not provided, the fuel tank 3 can be regarded as an "ahead-of-seat element".

The motorcycle 1 includes a seat height adjustment mechanism that is capable of adjusting the height of the seat 20 in two steps. Therefore, the height of the seat 20 can be set to either a certain height (hereinafter referred to as a "first height") or another height that is lower than the first height (hereinafter referred to as the "second height"). In the present specification, the state where the seat 20 is at the first height is referred to as a "high-position state", whereas the state where the seat 20 is at the second height is referred to as a "low-position state". Although a configuration is illustrated herein in which the seat height adjustment mechanism is able to adjust the height of the seat 20 in two steps, the seat height adjustment mechanism may be able to adjust the height of the seat 20 in three or more steps.

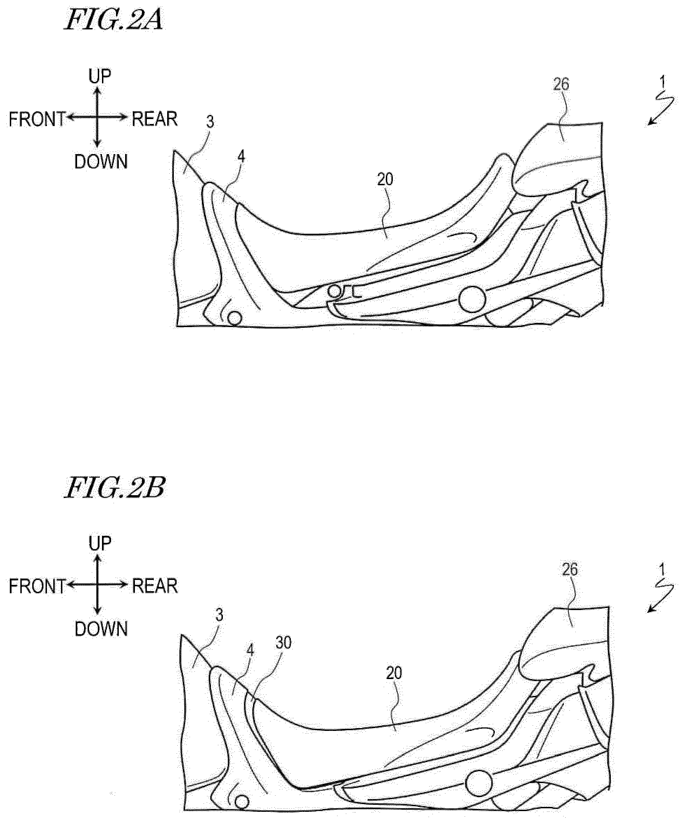

FIG. 2A is a side view showing the neighborhood of the seat 20 being in the high-position state. As shown in FIG. 2A, substantially no interspace exists between the seat 20 in the high-position state and the tank cover member (ahead-of-seat element) 4.

FIG. 2B is a side view showing the neighborhood of the seat 20 being in the low-position state. As shown in FIG. 2B, the motorcycle 1 further includes a spacer member 30 that is disposed between the seat 20 in the low-position state (i.e., at the second height) and the tank cover member 4. The spacer member 30 fills the interspace between the seat 20 and the tank cover member 4.

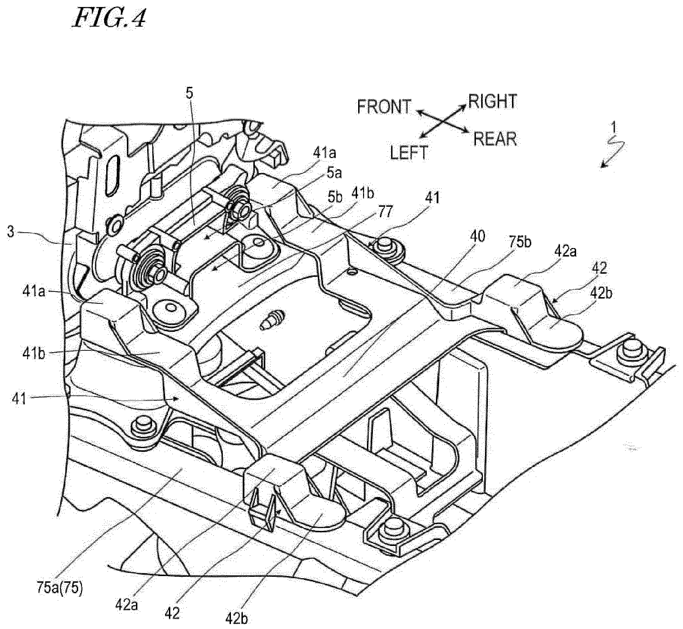

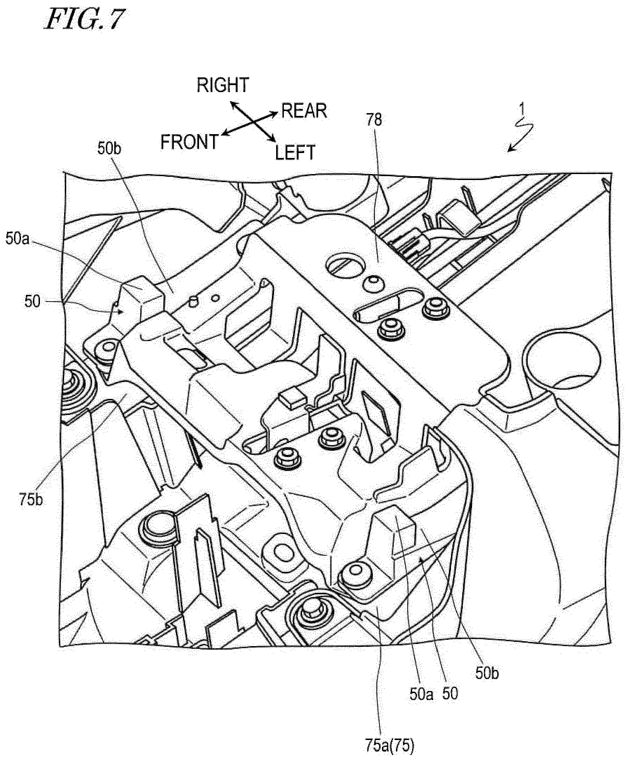

Hereinafter, the configuration of the seat height adjustment mechanism and the spacer member 30 will be described in more detail. In the present embodiment, the seat height adjustment mechanism includes a tank bracket 5 (see FIG. 4), a first supporting member 40 (see FIG. 4), and a pair of second supporting members 50 (FIG. 7) to be described below.

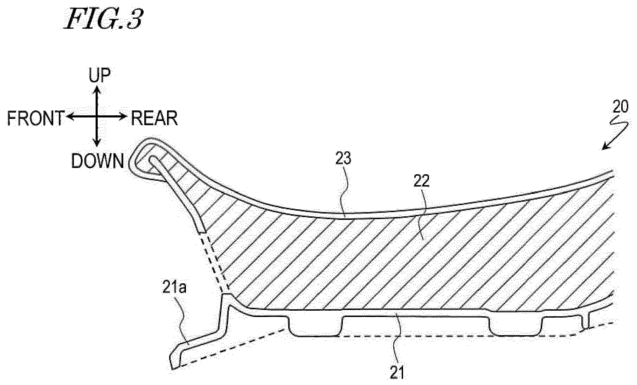

FIG. 3 is a cross-sectional view of the seat 20. As shown in FIG. 3, the seat 20 includes: a bottom plate 21 located at a bottom face of the seat 20; cushioning 22 supported by the bottom plate 21; and outer material 23 covering the cushioning 22. The bottom plate 21 includes a protrusion 21a that extends frontward. Although not shown herein, a plurality of load-receiving members to receive the load from the seat 20 are attached to both sides of the bottom plate 21. The load-receiving members may be made of rubber, for example.

FIG. 4 is a perspective view showing a state where the seat 20, the spacer member 30, and the tank cover member 4 are removed. FIG. 5 is a top view showing a state where the seat 20, the tandem seat 26, and the spacer member 30 are removed. As shown in FIG. 4 and FIG. 5, a cross member 77 is attached to the seat frame 75, near the fuel tank 3. The cross member 77 bridges across the left seat frame member 75a and the right seat frame member 75b.

The tank bracket 5 is attached to the fuel tank 3 and the cross member 77. As shown in FIG. 4, the tank bracket 5 has a plurality of insertion holes 5a and 5b into which the protrusion 21a of the bottom plate 21 can be inserted. The plurality of insertion holes 5a and 5b include a first insertion hole 5a and a second insertion hole 5b that is formed at a lower position than is the first insertion hole 5a. The protrusion 21a of the bottom plate 21 is inserted in the first insertion hole 5a when the seat 20 is in the high-position state, and when the seat 20 is in the low-position state is inserted in the second insertion hole 5b.

The first supporting member 40 is attached to the cross member 77 and the seat frame 75. The first supporting member 40 may be made of a resin material, for example. The first supporting member 40 has a substantially H shape in a plan view, and includes a pair of front extensions 41 and a pair of rear extensions 42.

Each of the pair of front extensions 41 has a high-position supporting surface 41a and a low-position supporting surface 41b that is located at a lower position than is the high-position supporting surface 41a. The low-position supporting surface 41b is located rearward of the high-position supporting surface 41a. In other words, the high-position supporting surface 41a and the low-position supporting surface 41b are arranged along the front-rear direction.

Each of the pair of rear extensions 42 includes a high-position supporting surface 42a and a low-position supporting surface 42b that is located at a lower position than is the high-position supporting surface 42a. The low-position supporting surface 42b is located rearward of the high-position supporting surface 42a. In other words, the high-position supporting surface 42a and the low-position supporting surface 42b are arranged along the front-rear direction.

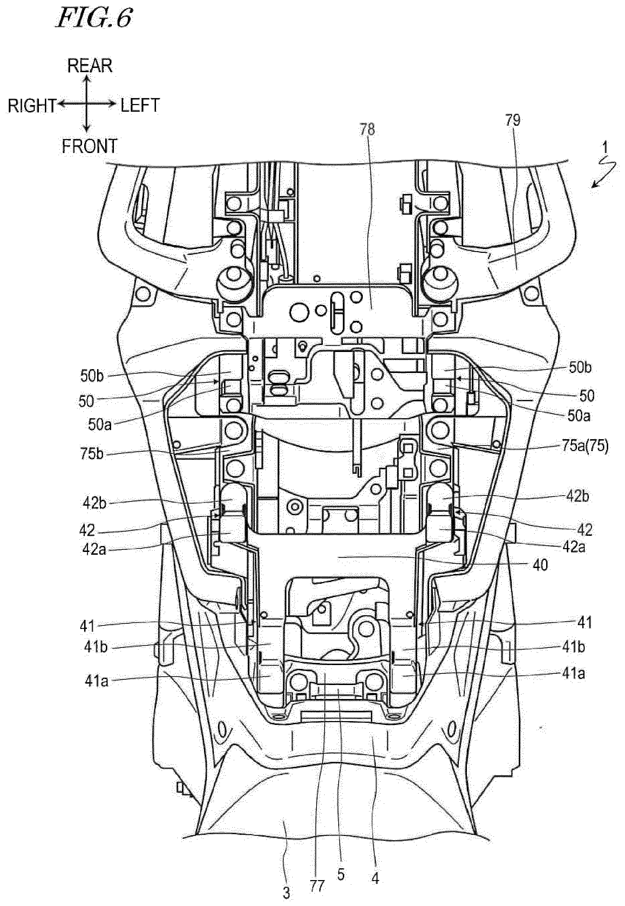

Note that the mounting position of the first supporting member 40 differs depending on whether the seat 20 is in the high-position state or the low-position state. FIG. 4 and FIG. 5 show the first supporting member 40 being attached to a mounting position for the low-position state. FIG. 6 shows the first supporting member 40 being attached to a mounting position for the high-position state. As shown in FIG. 6, when the seat 20 is in the high-position state, the first supporting member 40 is attached more rearward than when the seat 20 is in the low-position state.

As shown in FIG. 5 and FIG. 6, a seat lock bracket 78 is attached to the seat frame 75, rearward of the first supporting member 40. The seat lock bracket 78 is located near a rear end portion of the seat 20. FIG. 7 is a perspective view showing the neighborhood of the seat lock bracket 78, with the seat 20 and the tandem seat 26 removed. On a lower face of the seat lock bracket 78, a main seat lock mechanism for securing the seat 20 to the seat frame 75 in a detachable manner and a tandem seat lock mechanism for securing the tandem seat 26 to the seat frame 75 in a detachable manner are provided.

A pair of second supporting members 50 are disposed on both sides of the seat lock bracket 78. The pair of second supporting members 50 may be made of a resin material, for example. The pair of second supporting members 50 are attached to the seat frame 75, each extending along the front-rear direction. Each second supporting member 50 includes a high-position supporting surface 50a and a low-position supporting surface 50b that is located at a lower position than is the high-position supporting surface 50a. The low-position supporting surface 50b is located rearward of the high-position supporting surface 50a. In other words, the high-position supporting surface 50a and the low-position supporting surface 50b are arranged along the front-rear direction.

As has already been described, a plurality of load-receiving members are attached to the bottom plate 21 of the seat 20, so as to protrude downward from the bottom plate 21. These load-receiving members are supported by the first supporting member 40 and the pair of second supporting members 50. Specifically, when the seat 20 is in the high-position state, the plurality of load-receiving members are supported by the high-position supporting surfaces 41a, 42a and 50a. On the other hand, when the seat 20 is in the low-position state, the plurality of load-receiving members are supported by the low-position supporting surfaces 41b, 42b and 50b.

As described above, in the present embodiment, the tank bracket 5, the first supporting member 40, and the pair of second supporting members 50 together function as a seat height adjustment mechanism, thus allowing the height of the seat 20 to be adjusted. Note that the specific configuration of the seat height adjustment mechanism is not limited to what is exemplified herein, and various configurations that allow the height of the seat 20 to be adjusted in two or more steps may be used.

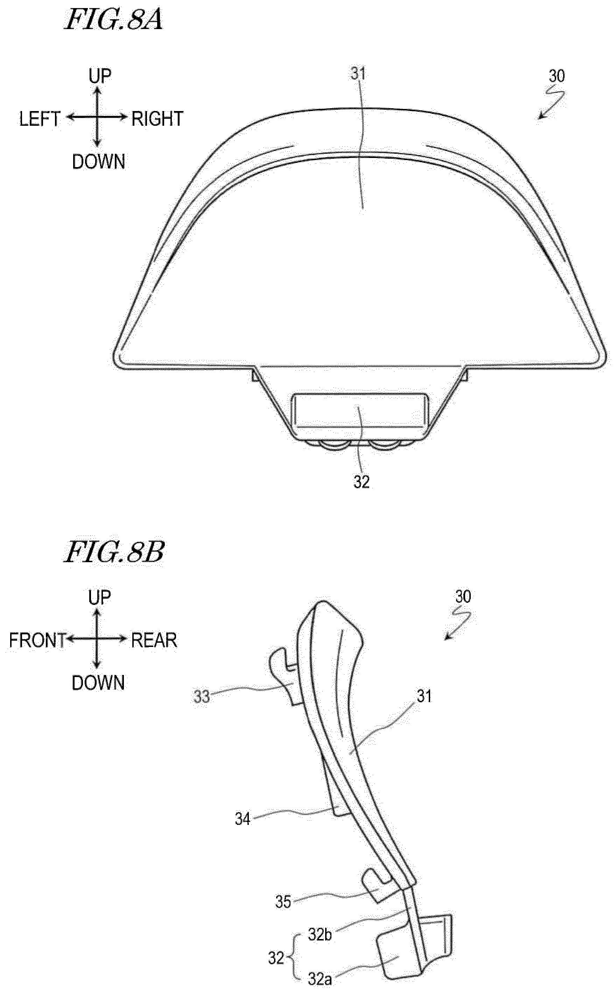

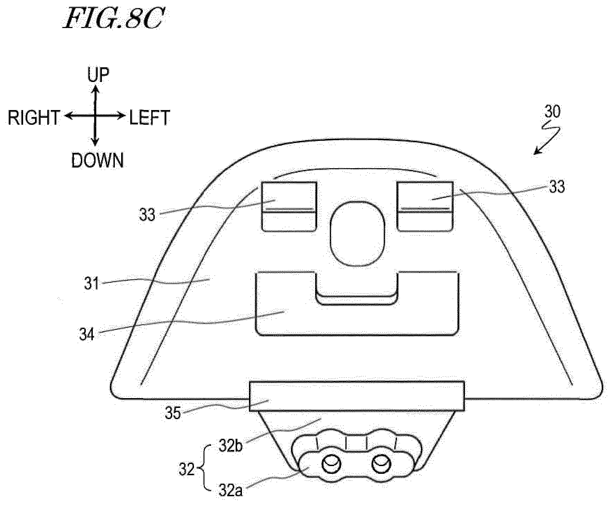

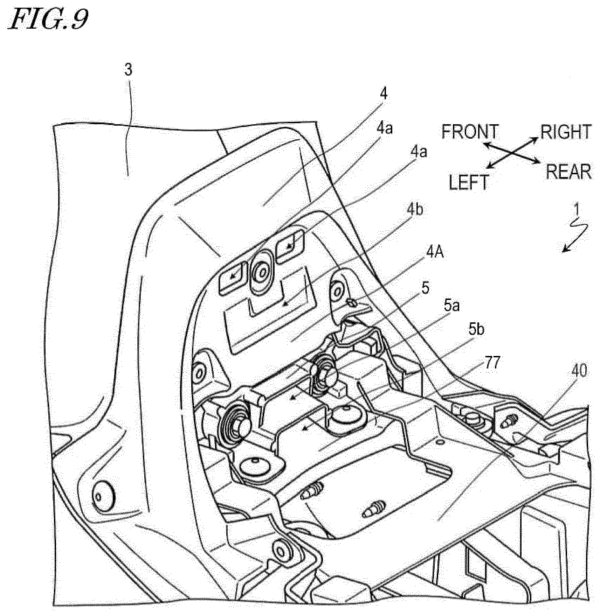

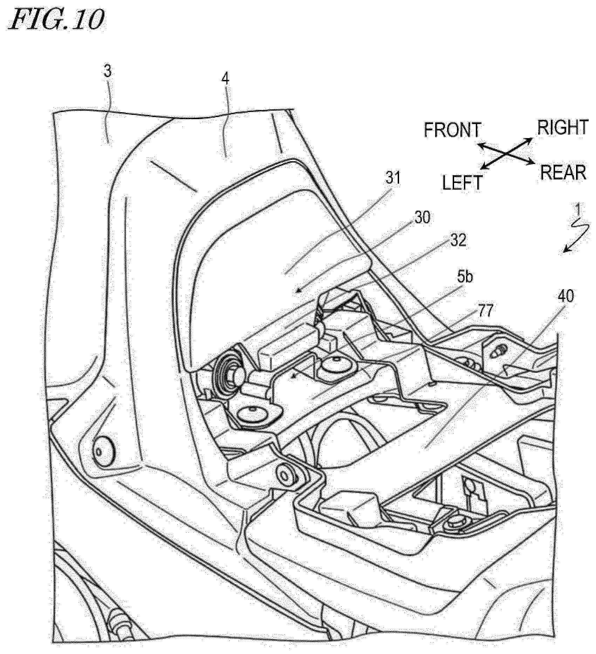

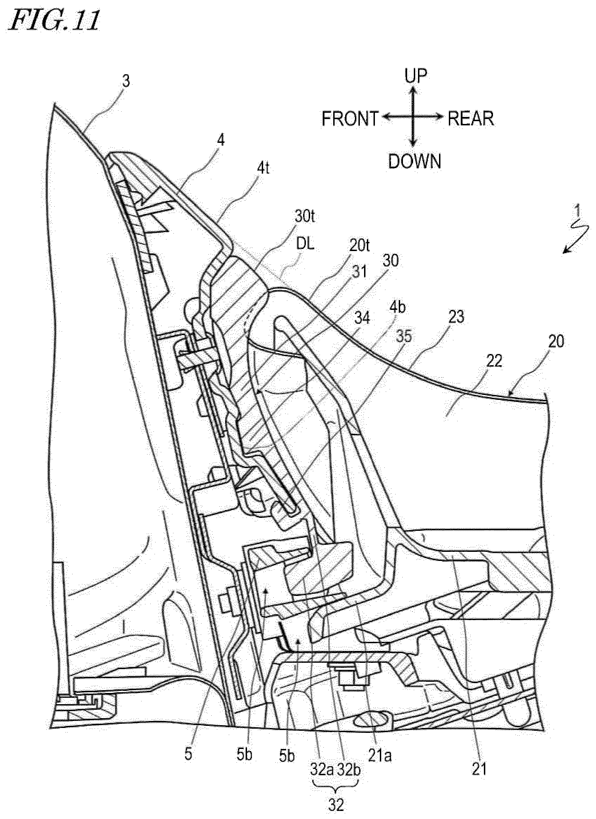

FIG. 8A, FIG. 8B and FIG. 8C are a plan view from the rear direction, a side view from the left direction, and a plan view from the front direction, respectively, of the spacer member 30. FIG. 9 is a perspective view showing the neighborhood of the tank cover member 4 before the spacer member 30 is attached. FIG. 10 is a perspective view showing the neighborhood of the tank cover member 4 after the spacer member 30 has been attached. FIG. 11 is a cross-sectional view showing the spacer member 30 having been disposed between the tank cover member 4 and the seat 20.

As shown in FIG. 8A, FIG. 8B and FIG. 8C, the spacer member 30 includes a body section 31 and an insertion-hole closing section 32. In the present embodiment, the spacer member 30 is made of rubber.

The body section 31 is a portion that fills the interspace between the seat 20 and the tank cover member 4 (ahead-of-seat element)(see FIG. 11). The body section 31 has a flattened shape extending along the up-down direction and the right-left direction. As shown in FIG. 8B, the body section 31 increases in thickness (i.e., length along the front-rear direction of the vehicle) in the upward direction from a lower end thereof.

The insertion-hole closing section 32 is a portion which extends downward from the body section 31 so as to close the first insertion hole 5a of the tank bracket 5 (see FIGS. 10 and 11). The insertion-hole closing section 32 includes: a protruding portion 32a that protrudes frontward to engage with the first insertion hole 5a; and a connecting portion 32b that interconnects between the protruding portion 32a and the body section 31.

As shown in FIG. 9, the tank cover member 4 includes an attachment section 4A, to which the spacer member 30 is to be attached. The attachment section 4 has a flattened shape extending along the up-down direction and the right-left direction. The attachment section 4A has two apertures (throughholes) 4a formed in positions opposing the spacer member 30 and a recess 4b.

As shown in FIG. 8B and FIG. 8C, the spacer member 30 further includes two first tabs 33, an alignment section 34, and a second tab 35.

The two first tabs 33 are provided on a front face of the body section 31, so as to lock into the two apertures 4a of the tank cover member 4. The alignment section 34 is provided on the front face of the body section 31, and is located below the first tabs 33. In the example shown, the alignment section 34 is a protruding portion that protrudes frontward from the front face of the body section 31, and as it engages with the recess 4b of the tank cover member 4, causes the spacer member 30 to be aligned with the tank cover member 4. The second tab 35 is provided at a lower end of the body section 31, so as to lock to a lower end of the attachment section 4A.

As shown in FIG. 11, an upper face 30t of the spacer member 30 is located at a position lower than an imaginary plane (indicated by dotted line DL in FIG. 11) connecting between an upper face 4t of the tank cover member 4 and an upper face 20t of the seat 20. The seat 20 overlaps a portion of the spacer member 30 in a side view of the vehicle.

As described above, the motorcycle 1 according to an embodiment of the present teaching includes the spacer member 30, which is located between the seat 20 being in the low-position state and the tank cover member 4 (ahead-of-seat element). Therefore, the spacer member 30 fills the interspace between the seat 20 and the tank cover member 4, thus promoting aesthetics and restraining intrusion of water and foreign objects. Thus, according to an embodiment of the present teaching, in a straddled vehicle having a seat height adjustment mechanism, it is possible to suitably restrain an interspace from emerging frontward of the seat 20.

As in the present embodiment, when the spacer member 30 includes the insertion-hole closing section 32 to close the first insertion hole 5a of the tank bracket 5, an incorrect placement of the seat 20 (i.e., inserting the protrusion 21a of the bottom plate 21 into the first insertion hole 5a) can be restrained.

When the spacer member 30 includes the tabs (first tabs) 33 to lock to the apertures 4a of the tank cover member 4 (ahead-of-seat element), the spacer member 30 can be attached to the tank cover member 4 in a suitable manner. Note that the number of first tabs 33 is not limited to two as illustrated above, but may be one or greater.

When the spacer member 30 includes the alignment section 34, alignment of the spacer member 30 with respect to the tank cover member 4 (ahead-of-seat element) is facilitated.

The upper face 30t of the spacer member 30 is preferably located at a position lower than an imaginary plane connecting between the upper face 4t of the tank cover member 4 (ahead-of-seat element) and the upper face 20t of the seat 20. With such a design, even if the spacer member 30 becomes somewhat larger due to manufacturing variations, the upper face 30t of the spacer member 30 is restrained from becoming higher than the aforementioned imaginary plane, whereby a decrease in aesthetics is restrained.

When the spacer member 30 includes a portion that increases in thickness in the upward direction from a lower end thereof, it is easier to adapt the shape of the spacer member 30 to the interspace between the seat 20 being in the low-position state (i.e., at the second height) and the tank cover member 4, whereby the spacer member 30 can be reduced in weight.

When the seat 20 overlaps a portion of the spacer member 30 in a side view of the vehicle, an interspace can be prevented from emerging between the seat 20 and the spacer member 30 in a side view of the vehicle, whereby aesthetics can be further promoted.

As the material of the spacer member 30, rubber can be suitably used. However, the material of the spacer member 30 is not limited to rubber. For example, the spacer member 30 may be made of a resin material. When the spacer member 30 is made of a resin material, the spacer member 30 may have a different shape as compared to when it is made of rubber. For example, a portion of the body section 31 that is not exposed to the outside may be omitted (thinned out) as appropriate.

Although the present embodiment illustrates an example where the tank cover member 4 is the ahead-of-seat element, the tank cover member 4 may be omitted; in other words, the fuel tank 3 may be the ahead-of-seat element. In the case where the fuel tank 3 is the ahead-of-seat element, the spacer member 30 is to be attached to the fuel tank 3. In the case where the tank cover member 4 is provided (i.e., the ahead-of-seat element is the tank cover member 4), there is an advantage of being able to simplify the shape of the fuel tank 3.

Although the motorcycle 1 has been exemplified as a straddled vehicle, the straddled vehicle is meant to be any automotive vehicle on which a rider straddles and rides, without being limited to motorcycles. The straddled vehicle may be a three-wheeled motorcycle (LMW) of a type whose direction of travel is changed as its body is tilted, or an ATV (All Terrain Vehicle) such as a buggy.

As described above, a straddled vehicle according to an embodiment of the present teaching includes: a body frame 70 including a head pipe 71; a seat 20 on which a rider sits, the seat 20 being disposed rearward of the head pipe 71; an ahead-of-seat element located rearward of the head pipe 71 and frontward of the seat 20; and a seat height adjustment mechanism capable of adjusting height of the seat 20 in at least two steps. When the seat 20 is at a first height, substantially no interspace exists between the seat 20 and the ahead-of-seat element; and the straddled vehicle further comprises a spacer member 30 to be disposed between the ahead-of-seat element and the seat 20 being at a second height which is lower than the first height, the spacer member 30 filling an interspace between the ahead-of-seat element and the seat 20 being at the second height.

A straddled vehicle according to an embodiment of the present teaching includes the spacer member 30 that is disposed between the seat 20 at a relatively low height (second height) and a ahead-of-seat element. Therefore, the spacer member 30 fills the interspace between the seat 20 and the ahead-of-seat element, thus promoting aesthetics and restraining intrusion of water and foreign objects.

In one embodiment, the seat 20 includes a bottom plate 21 located at a bottom face of the seat 20; the bottom plate 21 includes a protrusion 21a that extends frontward; the seat height adjustment mechanism includes a bracket 5 having a plurality of insertion holes 5a and 5b into which the protrusion 21a of the bottom plate 21 is insertable; the plurality of insertion holes 5a and 5b include a first insertion hole 5a and a second insertion hole 5b that is formed at a lower position than is the first insertion hole 5a; and the spacer member 30 includes: a body section 31 which fills the interspace between the ahead-of-seat element and the seat 20 being at the second height; and an insertion-hole closing section 32 extending downward from the body section 31 to close the first insertion hole 5a.

When the spacer member 30 includes the insertion-hole closing section 32 to close an insertion hole (first insertion hole 5a) that is at a relatively high position of the bracket 5, an incorrect placement of the seat 20 can be restrained.

In one embodiment, the spacer member 30 is made of rubber.

As the material of the spacer member 30, rubber can be suitably used.

In one embodiment, the ahead-of-seat element has at least one aperture made in a position opposing the spacer member 30; and the spacer member 30 includes at least one tab 33 to lock to the at least one aperture.

When the spacer member 30 includes the tab(s) 33 to lock to the aperture(s) of the ahead-of-seat element, the spacer member 30 can be attached to the ahead-of-seat element in a suitable manner.

In one embodiment, the spacer member 30 includes an alignment section 34 that causes the spacer member 30 to be aligned with the ahead-of-seat element.

When the spacer member 30 includes the alignment section 34, alignment of the spacer member 30 with respect to the ahead-of-seat element is facilitated.

In one embodiment, an upper face 30t of the spacer member 30 is located at a position lower than an imaginary plane connecting between an upper face of the ahead-of-seat element and an upper face 20t of the seat 20.

The upper face 30t of the spacer member 30 is preferably located at a position lower than an imaginary plane connecting between the upper face of the ahead-of-seat element and the upper face 20t of the seat 20. With such a design, even if the spacer member 30 becomes somewhat larger due to manufacturing variations, the upper face 30t of the spacer member 30 is restrained from becoming higher than the aforementioned imaginary plane, whereby a decrease in aesthetics is restrained.

In one embodiment, the spacer member 30 includes a portion that increases in thickness in an upward direction from a lower end of the spacer member 30.

When the spacer member 30 includes a portion that increases in thickness in the upward direction from a lower end thereof, it is easier to adapt the shape of the spacer member 30 to the interspace between the seat 20 being at the second height and the ahead-of-seat element, whereby the spacer member 30 can be reduced in weight.

In one embodiment, the seat 20 overlaps a portion of the spacer member 30 in a side view of the vehicle.

When the seat 20 overlaps a portion of the spacer member 30 in a side view of the vehicle, an interspace can be prevented from emerging between the seat 20 and the spacer member 30 in a side view of the vehicle, whereby aesthetics can be further promoted.

In one embodiment, the straddled vehicle further includes a fuel tank 3 provided between the head pipe 71 and the seat 20; and the ahead-of-seat element is a tank cover member 4 that includes a portion covering a rear end portion of the fuel tank 3.

The ahead-of-seat element may be a tank cover member 4 that includes a portion covering a rear end portion of the fuel tank 3, for example. By providing the tank cover member 4, the shape of the fuel tank 3 can be simplified.

In one embodiment, the ahead-of-seat element is a fuel tank 3 provided between the head pipe 71 and the seat 20.

The ahead-of-seat element may be the fuel tank 3.

According to an embodiment of the present teaching, in a straddled vehicle having a seat height adjustment mechanism, it is possible to suitably restrain an interspace from emerging frontward of the seat.

## Claims

1. A straddled vehicle comprising:
a body frame (70) including a head pipe (71);
a seat (20) configured for a rider to sit on, the seat (20) being disposed rearward of the head pipe (71) with regard to a front-rear direction of the vehicle;
a fuel tank (3) provided between the head pipe (71) and the seat (20);
an ahead-of-seat element (3, 4) located rearward of the head pipe (71) and frontward of the seat (20) with regard to the front-rear direction of the vehicle; and
a seat height adjustment mechanism (5, 40, 50) capable of adjusting height of the seat (20) in at least two steps with regard to an up-down direction of the vehicle, wherein,
when the seat (20) is at a first height, substantially no interspace exists between the seat (20) and the ahead-of-seat element (3, 4), and wherein
the ahead-of-seat element is a tank cover member (4) that includes a portion covering a rear end portion of the fuel tank (3), or
the ahead-of-seat element is the fuel tank (3) provided between the head pipe (71) and the seat (20),
the straddled vehicle further **characterised by**
a spacer member (30), the spacer member (30) is to be disposed between the ahead-of-seat element (3, 4) and the seat (20) being at a second height which is lower than the first height, the spacer member (30) filling an interspace between the ahead-of-seat element (3, 4) and the seat (20) being at the second height.

2. The straddled vehicle of claim 1, wherein the seat (20) includes a bottom plate (21) located at a bottom face of the seat (20);
the bottom plate (21) includes a protrusion (21a) that extends frontward with regard to the front-rear direction of the vehicle;
the seat height adjustment mechanism (5, 40, 50) includes a bracket having a plurality of insertion holes into which the protrusion (21a) of the bottom plate (21) is insertable;
the plurality of insertion holes include a first insertion hole (5a) and a second insertion hole (5b) that is formed at a lower position than is the first insertion hole (5a) with regard to the up-down direction of the vehicle; and
the spacer member (30) includes: a body section (31) which fills the interspace between the ahead-of-seat element (3, 4) and the seat (20) being at the second height; and an insertion-hole closing section (32) extending downward from the body section (31) with regard to the up-down direction of the vehicle to close the first insertion hole (5a).

3. The straddled vehicle of claim 1 or 2, wherein the spacer member (30) is made of rubber.

4. The straddled vehicle of any of claims 1 to 3, wherein the ahead-of-seat element (4) has at least one aperture (4a) made in a position opposing the spacer member (30); and
the spacer member (30) includes at least one tab (33, 35) to lock to the at least one aperture (4a).

5. The straddled vehicle of any of claims 1 to 4, wherein the spacer member (30) includes an alignment section (34) that causes the spacer member (30) to be aligned with the ahead-of-seat element (3, 4).

6. The straddled vehicle of any of claims 1 to 5, wherein an upper face (30t) of the spacer member (30) is located at a position lower than an imaginary plane connecting between an upper face (4t) of the ahead-of-seat element (4) and an upper face (20t) of the seat (20) with regard to the up-down direction of the vehicle.

7. The straddled vehicle of any of claims 1 to 6, **characterized in that** the spacer member (30) includes a portion that increases in thickness in an upward direction from a lower end of the spacer member (30) with regard to the up-down direction of the vehicle.

8. The straddled vehicle of any of claims 1 to 7, wherein the seat (20) overlaps a portion of the spacer member (30) in a side view of the vehicle.

## Patentansprüche

1. Ein Spreiz-Sitz-Fahrzeug, das umfasst:
einem Körperrahmen (70), der ein Kopfrohr (71) enthält;
einen Sitz (20), der konfiguriert ist, für einen Fahrer um darauf zu sitzen, der Sitz (20) ist in Bezug auf eine Vorder-Rück-Richtung des Fahrzeugs hinter dem Kopfrohr (71) angeordnet;
einen Kraftstofftank (3), der zwischen dem Kopfrohr (71) und dem Sitz (20) vorgesehen ist;
ein Vor-dem-Sitz-Element (3, 4), das in Bezug auf die Vorder-Rück-Richtung des Fahrzeugs hinter dem Kopfrohr (71) und vor dem Sitz (20) angeordnet ist; und
einen Sitzhöheneinstellmechanismus (5, 40, 50), der in der Lage ist, die Höhe des Sitzes (20) in zumindest zwei Stufen in Bezug auf eine Auf-Ab-Richtung des Fahrzeugs einzustellen, wobei,
wenn sich der Sitz (20) in einer ersten Höhe befindet, im Wesentlichen kein Zwischenraum zwischen dem Sitz (20) und dem Vor-dem-Sitz-Element (3, 4) besteht, und wobei
das Vor-dem-Sitz-Element ein Tankabdeckungselement (4) ist, das einen Abschnitt umfasst, der einen hinteren Endabschnitt des Kraftstofftanks (3) abdeckt, oder
das Vor-dem-Sitz-Element der Kraftstofftank (3) ist, der zwischen dem Kopfrohr (71) und dem Sitz (20) vorgesehen ist,
das Spreiz-Sitz-Fahrzeug **gekennzeichnet ist durch**
ein Abstandselement (30), wobei das Abstandselement (30) zwischen dem Vor-dem-Sitz-Element (3, 4) und dem Sitz (20) in einer zweiten Höhe zu positionieren ist, die niedriger als die erste Höhe ist, wobei das Abstandselement (30) einen Zwischenraum zwischen dem Vor-dem-Sitz-Element (3, 4) und dem Sitz (20), die in der zweiten Höhe ist, ausfüllt.

2. Das Spreiz-Sitz-Fahrzeug gemäß Anspruch 1, wobei der Sitz (20) eine Bodenplatte (21) enthält, die sich an einer Unterseite des Sitzes (20) befindet;
die Bodenplatte (21) einen Vorsprung (21a) enthält, der sich in Bezug auf die Vorder-Rück-Richtung des Fahrzeugs nach vorne erstreckt;
der Sitzhöheneinstellmechanismus (5, 40, 50) eine Halterung enthält, die eine Mehrzahl von Einsetzlöchern hat, in die der Vorsprung (21a) der Bodenplatte (21) einstetzbar ist;
die Mehrzahl von Einsetzlöchern ein erstes Einsetzloch (5a) und ein zweites Einsetzloch (5b), das an einer niedrigeren Position als das erste Einsetzloch (5a) in Bezug auf die Auf-Ab-Richtung des Fahrzeugs ausgebildet ist, umfasst; und
das Abstandselement (30) umfasst: einen Körperabschnitt (31), der den Zwischenraum zwischen dem Vor-Sitz-Element (3, 4) und dem Sitz (20), der sich auf der zweiten Höhe befindet, ausfüllt; und einen Einsetzloch-Verschlussabschnitt (32), der sich von dem Körperabschnitt (31) in Bezug auf die Auf-Ab-Richtung des Fahrzeugs nach unten erstreckt, um das erste Einsetzloch (5a) zu schließen.

3. Das Spreiz-Sitz-Fahrzeug gemäß Anspruch 1 oder 2, wobei das Abstandselement (30) aus Gummi gemacht ist.

4. Das Spreiz-Sitz-Fahrzeug gemäß irgendeinem der Ansprüche 1 bis 3, wobei das Vor-dem-Sitz-Element (4) zumindest eine Öffnung (4a), die in einer Position, die dem Abstandselement (30) gegenüberliegt ausgebildet ist, hat; und
das Abstandselement (30) zumindest eine Lasche (33, 35) enthält, um an der zumindest einen Öffnung (4a) zu verriegeln.

5. Das Spreiz-Sitz-Fahrzeug gemäß irgendeinem der Ansprüche 1 bis 4, wobei das Abstandselement (30) einen Ausrichtungsabschnitt (34) enthält, der bewirkt, dass das Abstandselement (30) mit dem Vor-dem-Sitz-Element (3, 4) ausgerichtet wird.

6. Das Spreiz-Sitz-Fahrzeug gemäß irgendeinem der Ansprüche 1 bis 5, wobei eine obere Flache (30t) des Abstandselements (30) an einer Position angeordnet ist, die niedriger als eine imaginäre Ebene ist, die zwischen einer oberen Fläche (4t) des Vor-dem-Sitz-Elements (4) und einer oberen Fläche (20t) des Sitzes (20) in Bezug auf die Auf-Ab-Richtung des Fahrzeugs verbindet.

7. Das Spreiz-Sitz-Fahrzeug gemäß irgendeinem der Ansprüche 1 bis 6, **dadurch gekennzeichnet, dass** das Abstandselement (30) einen Abschnitt enthält, der in der Dicke in einer Richtung nach oben, von einem unteren Ende des Abstandselements (30) in Bezug auf die Auf-Ab-Richtung des Fahrzeugs zunimmt.

8. Das Spreiz-Sitz-Fahrzeug gemäß irgendeinem der Ansprüche 1 bis 7, wobei der Sitz (20) in einer Seitenansicht des Fahrzeugs einen Abschnitt des Abstandselements (30) überlappt.

## Revendications

1. Véhicule à enfourcher comprenant :
un cadre (70) comportant un tube de tête (71) ;
un siège (20) configuré pour qu'un conducteur puisse s'y asseoir, le siège (20) étant disposé en arrière du tube de tête (71) en direction avant-arrière du véhicule ;
un réservoir de carburant (3) pourvu entre le tube de tête (71) et le siège (20) ;
un élément à l'avant du siège (3, 4) situé en arrière du tube de tête (71) et en avant du siège (20) en direction avant-arrière du véhicule ; et
un mécanisme de réglage de la hauteur du siège (5, 40, 50) capable de régler la hauteur du siège (20) à au moins deux positions en direction haut-bas du véhicule, dans lequel,
quand le siège (20) est à une première hauteur, il n'existe substantiellement aucun espace intermédiaire entre le siège (20) et l'élément à l'avant du siège (3, 4), et dans lequel
l'élément à l'avant du siège est un élément de carénage du réservoir (4) qui comprend une portion recouvrant une portion d'extrémité arrière du réservoir de carburant (3), ou
l'élément à l'avant du siège est le réservoir de carburant (3) pourvu entre le tube de tête (71) et le siège (20),
le véhicule à enfourcher étant en outre **caractérisé par** un élément d'entretoise (30), l'élément d'entretoise (30) à disposer entre l'élément à l'avant du siège (3, 4) et le siège (20) étant à une deuxième hauteur qui est inférieure à la première hauteur, l'élément d'entretoise (30) qui remplit un espace intermédiaire entre l'élément à l'avant du siège (3, 4) et le siège (20) étant à la deuxième hauteur.

2. Véhicule à enfourcher selon la revendication 1, dans lequel le siège (20) comprend une plaque inférieure (21) située sur une face inférieure du siège (20) ;
la plaque inférieure (21) comprend une protubérance (21a) qui s'étend vers l'avant en direction avant-arrière du véhicule ;
le mécanisme de réglage de la hauteur du siège (5, 40, 50) comprend une chaise comportant une pluralité de trous d'insertion dans lesquels peut s'insérer la protubérance (21a) de la plaque inférieure (21) ;
la pluralité de trous d'insertion comprend un premier trou d'insertion (5a) et un deuxième trou d'insertion (5b) qui est formé à une position plus basse que le premier trou d'insertion (5a) en direction haut-bas du véhicule ; et
l'élément d'entretoise (30) comprend : une section de corps (31) qui remplit l'espace intermédiaire entre l'élément à l'avant du siège (3, 4) et le siège (20), se trouvant à la deuxième hauteur ; et une section de fermeture de trou d'insertion (32) s'étendant vers le bas à partir de la section de corps (31) en direction haut-bas du véhicule pour fermer le premier trou d'insertion (5a).

3. Véhicule à enfourcher selon la revendication 1 ou 2, dans lequel l'élément d'entretoise (30) est en caoutchouc.

4. Véhicule à enfourcher selon l'une quelconque des revendications 1 à 3, dans lequel l'élément à l'avant du siège (4) comporte au moins une ouverture (4a) réalisée à une position opposée à l'élément d'entretoise (30) ; et
l'élément d'entretoise (30) comprend au moins une languette (33, 35) destinée à se verrouiller dans au moins une ouverture (4a).

5. Véhicule à enfourcher selon l'une quelconque des revendications 1 à 4, dans lequel l'élément d'entretoise (30) comprend une section d'alignement (34) qui amène l'élément d'entretoise (30) à s'aligner avec l'élément à l'avant du siège (3, 4).

6. Véhicule à enfourcher selon l'une quelconque des revendications 1 à 5, dans lequel une face supérieure (30t) de l'élément d'entretoise (30) est située à une position inférieure à un plan imaginaire connectant une face supérieure (4t) de l'élément à l'avant du siège (4) et une face supérieure (20t) du siège (20) en direction haut-bas du véhicule.

7. Véhicule à enfourcher selon l'une quelconque des revendications 1 à 6, **caractérisé en ce que** l'élément d'entretoise (30) comprend une portion dont l'épaisseur augmente en direction ascendante à partir d'une extrémité inférieure de l'élément d'entretoise (30) en direction haut-bas du véhicule.

8. Véhicule à enfourcher selon l'une quelconque des revendications 1 à 7, dans lequel le siège (20) chevauche une portion de l'élément d'entretoise (30) en vue latérale du véhicule.
